# FASCICULE DE BREVET EUROPEEN

(11) **EP 2 148 790 B1**
(45) Date de publication et mention de la délivrance du brevet: **21.09.2011**
(21) Numéro de dépôt: 08788110.8
(22) Date de dépôt: 03.04.2008
(51) Int. Cl.: B60K 6/543, B60K 6/36, B60W 20/00, B60W 30/18, F16H 3/72, B60W 10/08, B60W 10/18, B60W 10/10, B60W 10/06

(54) **SYSTEME DE COMMANDE D'UN GROUPE MOTOPROPULSEUR HYBRIDE POUR LA RECHARGE D'UNE BATTERIE**
STEUERSYSTEM FÜR EINE HYBRIDANTRIEBSEINHEIT ZUR WIEDERAUFLADUNG EINER BATTERIE
CONTROL SYSTEM FOR A HYBRID PROPULSION UNIT FOR RECHARGING A BATTERY

(30) Priorité: 23.04.2007 FR 0754632
(43) Date de publication de la demande: 03.02.2010
(73) Titulaire: Renault SAS, 92100 Boulogne Billancourt (FR)
(72) Inventeur: POGNANT-GROS, Philippe, F-92500 Rueil-Malmaison (FR); REYSS, Olivier, F-75014 Paris (FR); VILLENEUVE, Arnaud, F-78450 Vernouillet (FR)
(86) Numéro de dépôt international: PCT/FR2008/050585
(87) Numéro de publication internationale: WO 2008/145877

(56) Documents cités:
- EP-A- 1 413 801
- WO-A-2006/080570
- FR-A- 2 774 039
- FR-A- 2 774 040

## Description

L'invention concerne la recharge d'une batterie d'accumulation électrique utilisée dans un système de propulsion hybride pour véhicule automobile.

Les véhicules automobiles comportent généralement un élément de stockage électrique tel qu'une batterie afin de pourvoir aux besoins électriques des équipements embarqués alors que le véhicule est à l'arrêt. Cependant, les batteries étant composées d'éléments capacitifs, elles sont soumises à des courants de fuite. Négligeables sur une courte durée, ces courants de fuite peuvent néanmoins décharger une batterie, au moins partiellement, lors de longues périodes d'inactivité. Dans un véhicule équipé d'un moteur à combustion interne, la recharge de la batterie est effectuée via un alternateur entraîné par le moteur à combustion. Dans un véhicule hybride qui est équipé d'un moteur thermique et d'au moins un moteur électrique, on peut imaginer utiliser le moteur électrique comme générateur.

Le brevet US 6637530 décrit un système de contrôle du groupe motopropulseur d'un véhicule hybride comprenant un moteur thermique et une machine électrique capable de fonctionner en générateur électrique pour recharger la batterie alors que le moteur thermique est actif. Ce système détermine l'état de charge de la batterie et déclenche la recharge de la batterie lorsque l'état de charge le nécessite. La machine électrique peut être utilisée soit de façon classique comme un alternateur relié au moteur thermique ou au train de roues motrices, soit comme un générateur lors de freinages récupérateurs. Le véhicule décrit comporte par ailleurs une transmission variable à courroie (CVT).

La demande de brevet FR 2843339 décrit un système de commande du régime de ralenti pour un véhicule hybride, dans lequel un moteur thermique et un moteur électrique sont commandés afin d'atteindre un régime de ralenti pour la recharge de la batterie.

**Le document** FR 2 774 040 décrit un groupe motopropulseur hybride comprenant une transmission à deux trains épicycloïdaux, un moteur thermique, un moteur électrique et un alternateur. Le mode de rechargement de la batterie d'accumulateurs implique l'arrêt du véhicule, le moteur électrique et l'alternateur fonctionnant alors en générateurs.

**Le document** WO 2006/080570 décrit un groupe motopropulseur hybride comprenant un moteur thermique, deux moteurs électriques et une transmission comprenant un train épicycloïdal. Un capteur de position de la pédale de freinage permet de déterminer le couple de freinage requis. L'enfoncement de la pédale de freinage est ainsi détecté, mais l'activation du système de freinage ne fait pas l'objet d'une détection.

Dans tous ces systèmes connus, la recharge de la batterie est souvent trop lente ou insuffisante compte tenu de l'énergie électrique en quantité limitée fournie par l'alternateur ou un moteur électrique fonctionnant en génératrice.

Selon la nature de l'élément de stockage et de la transmission, on différencie plusieurs types de véhicules. Certains véhicules comprennent une batterie de faible capacité permettant le freinage récupératif et l'apport de puissance électrique en phase d'accélération. D'autres véhicules comportent une batterie plus importante qui autorise un fonctionnement purement électrique.

Par ailleurs, on connaît des véhicules automobiles équipés d'un groupe motopropulseur hybride à dérivation de puissance, dite transmission variable infinie (IVT) à variateur électrique, comprenant un moteur thermique et deux moteurs électriques. Ce type de transmission présente plusieurs degrés de liberté ce qui permet un contrôle plus fin et apporte plus de possibilités au niveau des modes de fonctionnement, comme l'utilisation de modes purement électriques, ou la modulation des différents modes de fonctionnement en fonction de l'état de charge de l'élément de stockage.

La transmission de type IVT nécessite l'utilisation des deux machines électriques afin de pouvoir transmettre la moindre puissance aux roues. Un niveau de charge minimum est nécessaire pour les faire fonctionner. Ainsi un véhicule hybride peut présenter un niveau de charge trop faible de l'élément de stockage, pour faire fonctionner le groupe motopropulseur, immobilisant le véhicule. Le conducteur peut également avoir besoin d'énergie électrique pour faire fonctionner des équipements de bord plus ou moins consommateurs d'énergie, comme la radio, la climatisation, sans vouloir rouler et alors que le niveau de charge de l'élément de stockage approche d'un niveau critique. D'autre part, lors d'une inutilisation prolongée, l'élément de stockage peut s'être vidé.

Dans les deux cas, une stratégie de contrôle de l'état de charge est nécessaire afin de contrôler le moteur thermique et d'utiliser la transmission pour recharger l'élément de stockage.

Pour réaliser la charge de l'élément de stockage, la méthode la plus simple se traduit par un découplage mécanique entre le moteur et les roues afin de ne pas transmettre de puissance aux roues. Une machine électrique est utilisée comme génératrice, l'autre est utilisée afin de permettre le découplage des roues en assurant qu'un couple nul est transmis aux roues.

L'invention a pour objet un système de commande d'un groupe motopropulseur hybride permettant de recharger plus rapidement une batterie utilisée dans un système hybride à dérivation de puissance alors que le véhicule est à l'arrêt.

L'invention a également pour objet d'autoriser un processus de charge parfaitement transparent pour le conducteur dans le cas d'un véhicule équipé d'une pédale de frein découplée.

Par pédale de frein découplée, on entend une pédale de frein reliée électriquement aux actionneurs du système de freinage par opposition à une pédale de frein reliée mécaniquement au système de freinage.

Dans un mode de réalisation, on définit un système de commande d'un groupe motopropulseur hybride à dérivation de puissance pour un véhicule automobile muni d'au moins deux roues motrices, comprenant un moteur thermique, une transmission à variation infinie comprenant au moins deux machines électriques et au moins deux trains d'engrenages épicycloïdaux, une batterie, un système de freinage des roues motrices, un moyen de détection de l'état du système de freinage, le moteur thermique étant relié mécaniquement avec la transmission à variation infinie par l'intermédiaire d'un premier train d'engrenages épicycloïdal, la transmission à variation infinie étant reliée mécaniquement avec les roues motrices par l'intermédiaire d'un deuxième train d'engrenages épicycloïdal. Le système de commande est capable de commander le moteur thermique et les machines électriques afin que le couple fourni par le moteur thermique soit transformé en énergie par les machines électriques utilisées comme générateurs pour recharger la batterie, après réception d'un signal provenant du moyen de détection de l'état du système de freinage indiquant que le système de freinage est serré.

En d'autres termes, le système de commande est capable de commander le fonctionnement simultané des deux machines électriques afin qu'elles fonctionnent en générateur de sorte que le couple fourni par le moteur thermique soit converti en énergie. Cette énergie est alors utilisée pour recharger la batterie. Pendant la durée de la recharge, les roues sont bloquées afin qu'aucune fraction du couple ne soit transformée en énergie cinétique. La charge de la batterie peut ainsi être considérablement accélérée.

Le système de commande ainsi défini peut comprendre un moyen de commande relié par ses sorties au moteur thermique et aux machines électriques, et par ses entrées à un moyen de détermination de la charge de la batterie et au moyen de détection de l'état du système de freinage. Le moyen de commande est capable d'émettre des consignes de couple à destination des différents organes moteur en fonction de l'état de charge de la batterie et de l'état d'activation du système de freinage.

Le système de commande peut émettre une consigne d'activation des freins afin que le véhicule soit immobilisé.

Le système de commande ainsi défini peut comprendre une interface entre le conducteur et le véhicule reliée par au moins une de ses entrées au moyen de commande. Le moyen de commande peut émettre une commande d'affichage vers l'interface entre le conducteur et le véhicule afin d'indiquer au conducteur la nécessité d'activer le système de freinage.

Selon un autre aspect de l'invention, on définit un procédé de commande d'un groupe motopropulseur hybride à dérivation de puissance pour un véhicule automobile muni d'au moins deux roues motrices, comprenant un moteur thermique, une transmission à variation infinie comprenant au moins deux machines électriques et au moins deux trains d'engrenages épicycloïdaux, une batterie, un système de freinage et un moyen de détection de l'état du système de freinage. On utilise les deux machines électriques pour transformer le couple fourni par le moteur thermique en énergie afin de recharger la batterie alors que le système de freinage est activé, le véhicule étant à l'arrêt. L'activation est détectée par le moyen de détection de l'état du système de freinage.

Dans un procédé de commande tel que défini précédemment et comprenant un moyen de commande relié par ses sorties au moteur thermique, et aux machines électriques, et par au moins une de ses entrées à un moyen de détermination de la charge de la batterie, on peut émettre des consignes de couple à destination des différents organes moteur en fonction de l'état de charge de la batterie.

On peut commander automatiquement l'activation du système de freinage pendant le rechargement de la batterie.

En variante, on peut indiquer au conducteur la nécessité d'activer le système de freinage pendant le rechargement de la batterie.

Dans le cas d'un système de freinage découplé, le système de commande peut automatiquement activer le système de freinage. Mais dans le cas d'un système de freinage non découplé, l'intervention du conducteur est nécessaire afin d'activer le système de freinage.

L'intégralité de la puissance provenant du moteur thermique est transmise aux moteurs électriques. Afin qu'ils n'accélèrent pas trop, une consigne de couple résistant est émise ce qui permet la génération d'énergie électrique.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 montre les principaux éléments constituant un système de commande selon l'invention ;
- la figure 2 montre les principales étapes d'un procédé de commande selon un mode de mise en oeuvre ; et
- la figure 3 montre les principales étapes d'un procédé de commande selon un autre mode de mise en oeuvre.

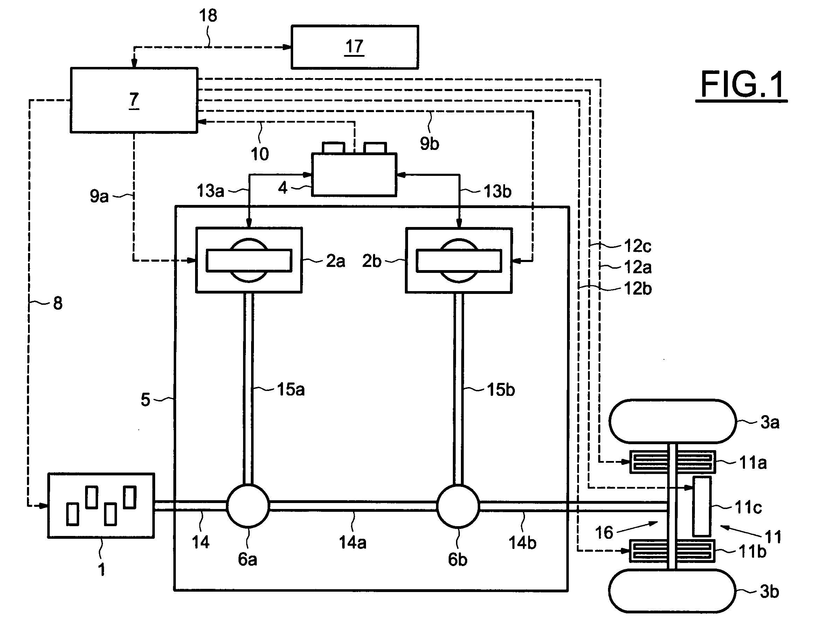

Sur la figure 1, on peut voir les principaux organes d'un véhicule équipé d'une transmission à dérivation de puissance et d'un groupe motopropulseur commandé par un système de commande selon l'invention. Le véhicule comprend un moteur thermique 1, des roues motrices 3a et 3b, une batterie 4 et une transmission à variation infinie 5 comprenant deux trains épicycloïdaux 6a et 6b et deux machines électriques 2a et 2b.

Le moteur thermique 1 est relié mécaniquement au premier train épicycloïdal 6a par la connexion 14 en vue d'une transmission de couple. Le premier train épicycloïdal 6a est relié mécaniquement à une première machine électrique 2a par la liaison 15a et au deuxième train épicycloïdal 6b par la liaison 14a. Le deuxième train épicycloïdal 6b est relié mécaniquement à une deuxième machine électrique 2b par la liaison 15b et aux roues 3a et 3b par un système de répartition de couple 16 et la liaison mécanique 14b. Les roues 3a et 3b peuvent etre immobilisées par un dispositif de freinage 11a et 11b respectivement, formant le système de freinage 11. Un moyen de détection 11c est capable de détecter l'état d'activation du système de freinage. Les machines électriques 2a et 2b sont reliées à la batterie 4 par les connexions électriques 13a et 13b respectivement.

La transmission à variation infinie 5 assure la dérivation et la régulation de la puissance fournie par le moteur thermique 1. Les deux machines électriques 2a et 2b fonctionnent indépendamment l'une de l'autre et permettent soit de fournir un couple complémentaire à celui fourni par le moteur thermique 1, soit de fournir un couple résistif se soustrayant à celui fourni par le moteur thermique 1, la puissance soustraite étant transformée en énergie électrique de façon récupérative. On peut ainsi balayer une gamme continue de puissance motrice sans changer la puissance fournie par le moteur thermique 1.

Le moyen de commande 7 est relié au moteur thermique 1 par la connexion 8, à la machine électrique 2a par la connexion 9a, à la machine électrique 2b par la connexion 9b, à la batterie 4 par la connexion 10, au dispositif de freinage 11a par la connexion 12a, au dispositif de freinage 11b par la connexion 12b et au moyen de détection 11c par la connexion 12c. Le moyen de commande 7 est également relié à une interface 17 entre le conducteur et le véhicule par la connexion 18 par laquelle le conducteur peut exprimer des souhaits de fonctionnement ou recevoir des informations.

Le moyen de commande 7 vérifie l'état de charge de la batterie 4. Si la batterie 4 nécessite d'être chargée, le moyen de commande 7 est capable lorsque le véhicule est à l'arrêt de bloquer automatiquement les dispositifs de freinage 11a et 11b si le système de freinage 11 est découplé de la pédale de frein. Sinon, le moyen de commande 7 peut envoyer un signal d'affichage à l'interface 17 entre le conducteur et le véhicule afin de prévenir le conducteur de la nécessité d'activer le système de freinage 11 lorsque le véhicule sera à l'arrêt.

Dés que le moyen de commande 7 reçoit la confirmation que le système de freinage 11 est activé et le véhicule à l'arrêt, il émet une consigne de couple vers le moteur thermique 1 et des consignes de couple résistant aux machines électriques 2a et 2b. Les roues étant bloquées, tout le couple généré par le moteur thermique 1 est transféré aux deux machines électriques 2a et 2b par l'intermédiaire des trains d'engrenages épicycloïdaux 6a et 6b. Les deux machines électriques 2a et 2b travaillant simultanément en générateurs et le couple généré est transformé en énergie qui est utilisée pour recharger la batterie 4.

Le moyen de commande 7 peut surveiller la charge de la batterie 4 et interrompre l'opération lorsque la batterie 4 est suffisamment rechargée. A cet effet, le moyen de commande 7 émet des consignes de couple nul au moteur thermique 1 et aux machines électriques 2a et 2b, puis désactive le système de freinage 11 dans le cas d'un système de freinage 11 découplé ou envoie une consigne d'extinction du signal d'affichage à l'interface 17 entre le conducteur et le véhicule afin de prévenir le conducteur de la possibilité de désactiver le système de freinage 11.

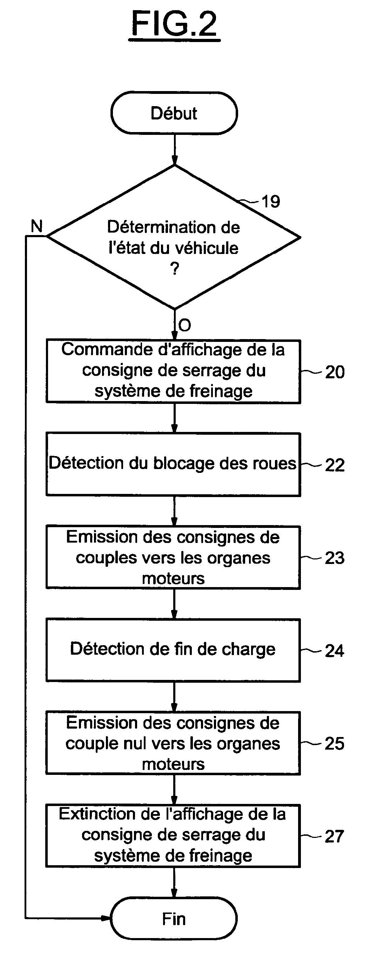

La figure 2 montre les principales étapes d'un procédé de commande pour un système de freinage non découplé. A l'étape 19, on détermine si la batterie 4 doit être chargée et si le véhicule est à l'arrêt. Si c'est le cas, on passe à l'étape 20 sinon le procédé se termine. A l'étape 20, on commande l'affichage d'une consigne d'activation du système de freinage 11 visible du conducteur. A l'étape 22, on vérifie que les roues sont bien bloquées. On passe ensuite à l'étape 23 au cours de laquelle on émet des consignes de couple vers les machines électriques 2a et 2b et vers le moteur thermique 1. Lorsque un état de fin de charge est détecté à l'étape 24, on passe à l'étape 25 au cours de laquelle on émet des consignes de couple nul au moteur thermique 1 et aux machines électriques 2a et 2b. A l'étape 27, on commande l'extinction de l'affichage de la consigne d'activation des freins.

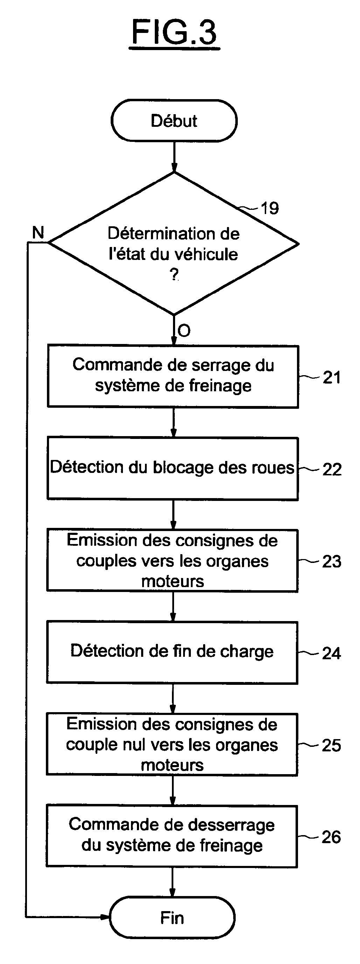

La figure 3 montre un autre mode de mise en oeuvre, dans le cas d'un système de freinage découplé de la pédale de freinage.

Les étapes identiques à celles décrites sur la figure 2 portent la même numérotation.

A l'étape 19, on détermine si la batterie 4 nécessite d'être changée et si le véhicule est à l'arrêt. Si c'est le cas, on passe à l'étape 21 sinon le procédé se termine. A l'étape 21, on bloque les roues en commandant automatiquement l'activation du système de freinage 11. A l'étape 22, on vérifie que les roues sont bien bloquées. On passe ensuite à l'étape 23 au cours de laquelle on émet des consignes de couple vers les machines électriques 2a et 2b et vers le moteur thermique 1. Lorsque un état de fin de charge est détecté à l'étape 24, on passe à l'étape 25 au cours de laquelle on émet des consignes de couple nul au moteur thermique 1 et aux machines électriques 2a et 2b. A l'étape 26, on commande la désactivation du système de freinage 11.

L'invention propose un moyen simple et efficace de recharger rapidement une batterie dans un véhicule hybride muni d'une transmission variable infinie à variateur électrique. En s'affranchissant des contraintes de découplage des roues par une machine électrique, le système peut utiliser deux machines électriques simultanément au lieu d'une seule, et recharger plus rapidement une batterie. Le coût en carburant est réduit par rapport à des solutions conventionnelles et ne requiert pas la mise en mouvement du véhicule.

Dans le cas d'un système de freinage découplé, le blocage des roues et la recharge de l'élément de stockage se fait de manière transparente pour le conducteur.

## Revendications

1. Système de commande d'un groupe motopropulseur hybride à dérivation de puissance pour un véhicule automobile muni d'au moins deux roues motrices, comprenant un moteur thermique (1), une batterie (4), un système de freinage (11) des roues motrices, un moyen de détection de l'état du système de freinage (11c), et une transmission (5) à variation infinie comprenant au moins deux machines électriques (2a,2b) et au moins deux trains d'engrenages épicycloïdaux (6a,6b), le moteur thermique (1) étant relié mécaniquement avec la transmission (5) à variation infinie par l'intermédiaire d'un premier train d'engrenages épicycloïdal (6a), la transmission (5) à variation infinie étant reliée mécaniquement avec les roues motrices par l'intermédiaire d'un deuxième train d'engrenages épicycloïdal (6b), **caractérisé par le fait que** le système de commande est capable de commander le moteur thermique (1) et les deux machines électriques (2a,2b) afin que le couple fourni par le moteur thermique (1) soit transformé en énergie par les deux machines électriques (2a,2b) utilisées comme générateurs pour recharger la batterie (4), après réception d'un signal provenant du moyen de détection de l'état du système de freinage (11c) indiquant que le système de freinage (11) est activé.

2. Système de commande selon la revendication 1 comprenant un moyen de commande (7) relié par ses sorties au moteur thermique (1), et aux machines électriques (2a,2b), et par ses entrées à un moyen de détermination de la charge de la batterie (4) et au moyen de détection de l'état du système de freinage (11c), le moyen de commande (7) étant capable d'émettre des consignes de couple à destination des différents organes moteur en fonction de l'état de charge de la batterie (4) et de l'etat d'activation du système de freinage (11).

3. Système de commande selon la revendication 2 dans lequel le moyen de commande (7) est relié par au moins une de ses sorties au système de freinage (11) du véhicule, le système de commande (7) étant capable d'émettre une consigne d'activation du système de freinage (11).

4. Système de commande selon la revendication 2 comprenant une interface (17) entre le conducteur et le véhicule reliée par au moins une de ses entrées au moyen de commande (7), le moyen de commande (7) étant capable d'émettre une commande d'affichage vers l'interface (17) entre le conducteur et le véhicule afin d'indiquer au conducteur la nécessité d'activer le système de freinage (11).

5. Procédé de commande d'un groupe motopropulseur hybride à dérivation de puissance pour un véhicule automobile muni d'au moins deux roues motrices, comprenant un moteur thermique (1), une batterie (4), un système de freinage (11) et une transmission (5) à variation infinie comprenant au moins deux machines électriques (2a,2b) et au moins deux trains d'engrenages épicycloïdaux (6a,6b), **caractérisé par le fait que** l'on utilise simultanément les deux machines électriques (2a,2b) pour transformer le couple fourni par le moteur thermique (1) en énergie afin de recharger la batterie (4) alors que le système de freinage (11) est activé, l'activation du système de freinage étant détectée par un moyen de détection (11c).

6. Procédé de commande selon la revendication 5 dans lequel on émet des consignes de couple à destination des différents organes moteur en fonction de l'état de charge de la batterie (4) et de l'état d'activation du système de freinage (11).

7. Procédé de commande selon les revendications 5 ou 6 dans lequel on commande l'activation du système de freinage (11) pendant le rechargement de la batterie (4).

8. Procédé de commande selon la revendication 5 ou 6 dans lequel on indique au conducteur la nécessité d'activation le système de freinage (11) pendant le rechargement de la batterie (4).

## Claims

1. System for controlling a hybrid propulsion unit with diverted power for a motor vehicle equipped with at least two driven wheels, comprising a combustion engine (1), a battery (4), a braking system (11) for braking the driven wheels, a means of detecting the status of the braking system (11c), and an infinitely-variable transmission (5) comprising at least two electric machines (2a, 2b) and at least two epicyclic gear sets (6a, 6b), the combustion engine (1) being mechanically connected to the infinitely-variable transmission (5) by a first epicyclic gear set (6a), the infinitely-variable transmission (5) being mechanically connected to the driven wheels via a second epicyclic gear set (6b), **characterized in that** the control system is capable of operating the combustion engine (1) and the two electric machines (2a, 2b) in such a way that the torque supplied by the combustion engine (1) is converted into energy by the two electric machines (2a, 2b) which are used as generators to recharge the battery (4) following receipt of a signal from the means that detects the status of the braking system (11c) indicating that the braking system (11) is activated.

2. Control system according to Claim 1, comprising a control means (7) connected by its outputs to the combustion engine (1) and to the electric machines (2a, 2b), and by its inputs to a means of determining the charge of the battery (4) and to the means of detecting the status of the braking system (11c), the control means (7) being capable of emitting torque instructions destined for the various driving components on the basis of the level of charge of the battery (4) and the activation status of the braking system (11).

3. Control system according to Claim 2, in which the control means (7) is connected by at least one of its outputs to the braking system (11) of the vehicle, the control system (7) being capable of emitting an instruction to activate the braking system (11).

4. Control system according to Claim 2, comprising an interface (17) between the driver and the vehicle, which interface is connected by at least one of its inputs to the control means (7), the control means (7) being capable of emitting to the interface (17) between the driver and the vehicle a display command to indicate to the driver the need to activate the braking system (11).

5. Method of controlling a hybrid propulsion unit with diverted power for a motor vehicle equipped with at least two driven wheels, comprising a combustion engine (1), a battery (4), a braking system (11) and an infinitely-variable transmission (5) comprising at least two electric machines (2a, 2b) and at least two epicyclic gear sets (6a, 6b), **characterized in that** the two electric machines (2a, 2b) are used simultaneously to convert the torque supplied by the combustion engine (1) into energy in order to recharge the battery (4) while the braking system (11) is activated, activation of the braking system being detected by a detection means (11c).

6. Control method according to Claim 5, in which torque instructions destined for the various driving components are emitted on the basis of the level of charge of the battery (4) and of the activation status of the braking system (11).

7. Control method according to Claim 5 or 6, in which activation of the braking system (11) while the battery (4) is being recharged is commanded.

8. Control method according to Claim 5 or 6, in which the need to activate the braking system (11) while the battery is being recharged (4) is indicated to the driver.

## Patentansprüche

1. System zur Steuerung einer Hybridantriebseinheit mit Leistungsverzweigung für ein mit mindestens zwei Antriebsrädern ausgestattetes Kraftfahrzeug, das einen Verbrennungsmotor (1), eine Batterie (4), ein Bremssystem (11) der Antriebsräder, eine Einrichtung zur Erfassung des Zustands des Bremssystems (11c) und ein endlos verstellbares Getriebe (5) enthält, das mindestens zwei elektrische Maschinen (2a, 2b) und mindestens zwei Planetengetriebezüge (6a, 6b) enthält, wobei der Verbrennungsmotor (1) über einen ersten Planetengetriebezug (6a) mechanisch mit dem endlos verstellbaren Getriebe (5) verbunden ist, wobei das endlos verstellbare Getriebe (5) über einen zweiten Planetengetriebezug (6b) mechanisch mit den Antriebsrädern verbunden ist, **dadurch gekennzeichnet, dass** das Steuersystem den Verbrennungsmotor (1) und die zwei elektrischen Maschinen (2a, 2b) so steuern kann, dass das vom Verbrennungsmotor (1) gelieferte Drehmoment von den zwei elektrischen Maschinen (2a, 2b) in Energie umgewandelt wird, die als Generatoren verwendet werden, um die Batterie (4) nach Empfang eines von der Einrichtung zur Erfassung des Zustands des Bremssystems (11c) kommenden Signals, das anzeigt, dass das Bremssystem (11) aktiviert ist, wieder aufzuladen.

2. Steuersystem nach Anspruch 1, das eine Steuereinrichtung (7) enthält, die über ihre Ausgänge mit dem Verbrennungsmotor (1) und mit den elektrischen Maschinen (2a, 2b) und über ihre Eingänge mit einer Einrichtung zur Bestimmung der Ladung der Batterie (4) und mit der Einrichtung zur Erfassung des Zustands des Bremssystems (11c) verbunden ist, wobei die Steuereinrichtung (7) abhängig vom Zustand der Ladung der Batterie (4) und vom Aktivierungszustand des Bremssystems (11) Drehmomentsollwerte an die verschiedenen Antriebsorgane senden kann.

3. Steuersystem nach Anspruch 2, bei dem die Steuereinrichtung (7) über mindestens einen ihrer Ausgänge mit dem Bremssystem (11) des Fahrzeugs verbunden ist, wobei das Steuersystem (7) fähig ist, eine Aktivierungsanweisung des Bremssystems (11) zu senden.

4. Steuersystem nach Anspruch 2, das eine Schnittstelle (17) zwischen dem Fahrer und dem Fahrzeug enthält, die über mindestens einen ihrer Eingänge mit der Steuereinrichtung (7) verbunden ist, wobei die Steuereinrichtung (7) fähig ist, eine Anzeigesteuerung an die Schnittstelle (17) zwischen dem Fahrer und dem Fahrzeug zu senden, um dem Fahrer die Notwendigkeit der Aktivierung des Bremssystems (11) anzuzeigen.

5. Verfahren zur Steuerung einer Hybridantriebseinheit mit Leistungsverzweigung für ein mit mindestens zwei Antriebsrädern ausgestattetes Kraftfahrzeug, das einen Verbrennungsmotor (1), eine Batterie (4), ein Bremssystem (11) und ein endlos verstellbares Getriebe (5) enthält, das mindestens zwei elektrische Maschinen (2a, 2b) und mindestens zwei Planetengetriebezüge (6a, 6b) enthält, **dadurch gekennzeichnet, dass** die zwei elektrischen Maschinen (2a, 2b) gleichzeitig verwendet werden, um das vom Verbrennungsmotor (1) gelieferte Drehmoment in Energie umzuwandeln, um die Batterie (4) wieder aufzuladen, während das Bremssystem (11) aktiviert ist, wobei die Aktivierung des Bremssystems von einer Erfassungseinrichtung (11c) erfasst wird.

6. Steuerverfahren nach Anspruch 5, bei dem Drehmomentsollwerte abhängig vom Zustand der Ladung der Batterie (4) und vom Aktivierungszustand des Bremssystems (11) an die verschiedenen Antriebsorgane gesendet werden.

7. Steuerverfahren nach den Ansprüchen 5 oder 6, bei dem die Aktivierung des Bremssystems (11) während des Aufladens der Batterie (4) gesteuert wird.

8. Steuerverfahren nach Anspruch 5 oder 6, bei dem dem Fahrer die Notwendigkeit der Aktivierung des Bremssystems (11) während des Aufladens der Batterie (4) angezeigt wird.
